# EUROPÄISCHE PATENTANMELDUNG

(11) **EP 4 047 512 A1**
(43) Veröffentlichungstag der Anmeldung: **24.08.2022**
(21) Anmeldenummer: 21157661.6
(22) Anmeldetag: 17.02.2021
(51) Int. Cl.: G06K 9/00, C21D 8/00

(54) **VERFAHREN ZUR VERFOLGUNG VON OBJEKTEN IN EINEM PRODUKTIONSPROZESS**

(71) Anmelder: vR production (DUKTUS) gmbh, 35576 Wetzlar (DE)
(72) Erfinder: SCHNEPPER, Sebastian, 35708 Haiger (DE)
(74) Vertreter: Patentanwälte Olbricht Buchhold Keulertz

(57) **Zusammenfassung**

Verfahren zur Verfolgung von Objekten in einem Produktionsprozess, umfassend die folgenden Schritte: Bewegen von Objekten entlang eines ersten Abschnitts eines Produktionsprozesses; optische Erfassung eines ersten Bildausschnitts umfassend den ersten Abschnitt des Produktionsprozesses und Erstellung einer Bilddatensequenz aus Einzelbilddaten des ersten Bildausschnitts; Identifizierung von neu in den ersten Bildausschnitt eintretenden Objekten durch digitale Auswertung der Einzelbilddaten der Bilddatensequenz; digitale Zuordnung eines digitalen Identifikators zu jedem identifizierten neu eingetretenen Objekt; Identifizierung von Objekten, denen im Rahmen der digitalen Auswertung von älteren Einzelbilddaten der Bilddatensequenz bereits ein digitaler Identifikator zugeordnet wurde, durch digitale Auswertung von jüngeren Einzelbilddaten der Bilddatensequenz.

## Beschreibung

Die Erfindung betrifft ein Verfahren zur Verfolgung von Objekten in einem Produktionsprozess gemäß dem Anspruch 1.

Viele Objekte durchlaufen bei ihrer Herstellung einen Prozess, bei dem sie an verschiedenen Stationen oder Maschinen auf unterschiedliche Art und Weise ver- bzw. bearbeitet oder gelagert werden. Um zu gewährleisten, dass die Objekte am Ende ihrer Fertigung eine möglichst hohe Qualität aufweisen, müssen neu produzierte Objekte überprüfbar und ihre Produktionsherkunft nachverfolgbar sein. Dies kann zum Beispiel durch physisches Kennzeichnen neu erhaltener Objekte erfolgen, etwa in Form von Barcodes oder vergleichbaren Kennzeichnungen. Idealerweise kann der Kennzeichnung dann entnommen werden, wann, wo und wie das jeweilige Objekt produziert wurde. Die physische Kennzeichnung der Objekte sollte am Ende ihrer Herstellung erfolgen, um den zurückgelegten Produktionsweg abrufbar zu machen. Auf diese Weise können ganze Chargen überprüft werden, sobald sich eines der Objekte aus dieser Charge als mangel- oder fehlerhaft herausstellen sollte.

Häufig stehen der physischen Kennzeichnung produktionsbedingte Hindernisse im Weg. So lassen sich etwa Objekte, die unter sehr hohen Temperaturen hergestellt bzw. gegossen werden, oftmals nicht mit Barcodes, Aufdrucken o.ä. versehen. Ebenfalls ungünstig für derartige Kennzeichnungen sind Objekte, denen am Ende ihrer Herstellung eine Farb- oder Schutzschicht aufgetragen werden muss. Ebenso können herstellungsbedingte Schmutzpartikel eine physische Kennzeichnung erschweren. Schließlich können auch verschiedene räumlich voneinander getrennte Abschnitte eines Produktionsprozesses eine lücken- und fehlerlose Kennzeichnung der Objekte erschweren - etwa, durch einen gesammelten Transfer von Objekten aus einem Produktionsbereich in einen anderen.

DE 10 2006 002 704 A1 betrifft ein Verfahren und eine Vorrichtung zur Überwachung einer Produktionslinie, bei der Objekte über Transportwege zwischen Maschinen befördert werden. Zur Erkennung von Störungen schlägt das Verfahren die folgenden Schritte vor: Generieren einer Referenzbildsequenz, wobei diese mindestens einen zu überwachenden Transportweg zwischen Maschinen abbildet; Ermitteln einer von der Bewegung der zwischen den Maschinen transportierten Objekte abgeleiteten statistischen Kenngröße; Generieren einer Testbildsequenz, wobei diese dieselben Transportwege zwischen den Maschinen abbildet; Ermitteln einer von der Bewegung eines Objekts abgeleiteten statistischen Kenngröße für jedes der abgebildeten Objekte; Vergleichen der für die Testbildsequenz ermittelten statistischen Kenngröße mit der für die Referenzbildsequenz ermittelten statistischen Kenngröße.

DE 10 2007 045 381 A1 betrifft ein Verfahren zur Erkennung von Objekten bei robotergestützten Produktions- und Fertigungsprozessen, wobei insbesondere die geometrische Gestalt oder die räumliche Orientierung oder die Lage des jeweiligen Objektes, insbesondere eines mittels eines Förder- oder Transportbandes bewegten Objektes, relativ zu wenigstens einer Handhabungsvorrichtung oder einem Referenzpunkt, auch unabhängig von den jeweils vorherrschenden Lichtverhältnissen, bestimmbar ist.

DE 10 2015 014 415 A1 betrifft ein Verfahren zur Erkennung von bewegten Objekten in einer Produktionshalle, bei welchem von einer 3D-Kamera ein 3D-Bild einer Szene erstellt wird, wobei die 3D-Kamera eine 3D-Punktwolke exportiert. Bei dem Verfahren wird ein reales Bild der gleichen Szene erstellt, bei welchem die Objekte durch ein *Convolutional Neural Network* (dt. "faltendes neuronales Netzwerk") klassifiziert werden und mittels der klassifizierten Objekte dieselben Objekte in der 3D-Punktwolke vermessen werden.

Die aus dem Stand der Technik bekannten Verfahren und Systeme zur Überwachung von Objekten in einem Produktionsprozess erfassen damit bereits Auswirkungen von Störungen, wie zum Beispiel eine Verringerung des ausgestoßenen Produktes eines Transportbandes oder eine Änderung in den Betriebsparametern einer Maschine.

Aufgabe der Erfindung ist es, die Nachteile im Stand der Technik zu beseitigen und ein Verfahren bereitzustellen, das die Rückverfolgung eines Fertigungswegs eines über einen Produktionsprozess hergestellten Objekts ermöglicht.

Hauptmerkmale der Erfindung sind im kennzeichnenden Teil von Anspruch 1 angegeben. Ausgestaltungen sind Gegenstand der Ansprüche 2 bis 12.

In einem ersten Aspekt betrifft die Erfindung ein Verfahren zur Verfolgung von Objekten in einem Produktionsprozess umfassend folgenden Schritte: Bewegen von Objekten entlang eines ersten Abschnitts eines Produktionsprozesses; optische Erfassung eines ersten Bildausschnitts umfassend den ersten Abschnitt des Produktionsprozesses und Erstellung einer Bilddatensequenz aus Einzelbilddaten des ersten Bildausschnitts; Identifizierung von neu in den ersten Bildausschnitt eintretenden Objekten durch digitale Auswertung der Einzelbilddaten der Bilddatensequenz; digitale Zuordnung eines digitalen Identifikators zu jedem identifizierten neu eingetretenen Objekt; Identifizierung von Objekten, denen im Rahmen der digitalen Auswertung von älteren Einzelbilddaten der Bilddatensequenz bereits ein digitaler Identifikator zugeordnet wurde, durch digitale Auswertung von jüngeren Einzelbilddaten (5a,5b) der Bilddatensequenz.

Die Objekte können dabei vorzugsweise Werkstücke sein, die in bzw. entlang des Produktionsprozesses geführt werden, wobei der Produktionsprozess insbesondere verschiede Bearbeitungs- oder Transportschritte umfasst. Besonders bevorzugte Werkstücke sind dabei Rohre oder Rohrbauteile. Die erfindungsgemäßen Verfahrensschritte müssen nicht notwendigerweise in der Reihenfolge ausgeführt werden, in der sie in der vorliegenden Anmeldung beschrieben werden.

Gemäß der vorliegenden Erfindung werden die Objekte zunächst entlang eines ersten Abschnitts eines Produktionsprozesses bewegt. Unter dem Begriff Produktionsprozess können beispielsweise Prozesses entlang einer Fertigungs- bzw. Produktionslinie verstanden werden, welche zum Beispiel verschiedene Transport-, Verteilungs- oder Bearbeitungsstationen umfasst, an denen die Objekte entlanggeführt werden. Als Abschnitt eines Produktionsprozesses kann ein Sektor oder ein Bereich verstanden werden, in dem ein oder mehrere Arbeitsschritte (räumlich) zusammengefügt werden. Allen Produktionsprozessen im Sinne der Erfindung ist ein Material- und/ oder Objektfluss gemein, wobei zum Auffangen von Taktunterschieden oder kurzfristigen Störungen Pufferstrecken oder Pufferbereiche in den Produktionsprozess integriert sein können. Darüber hinaus muss der Produktionsprozess nicht auf einen Einzelraum beschränkt sein, sondern kann mehrere räumlich voneinander getrennte Bereiche umfassen. Entsprechend müssen sich die hergestellten Objekte nicht notwendigerweise in einer fixen seriellen Reihenfolge befinden. Schließlich können die Objekte ruhen oder in Bewegung sein, wobei das Bewegen der Objekte entlang des ersten Abschnitts des Produktionsprozesses sowohl seriell als auch nicht-seriell erfolgen kann.

Falls nicht explizit angegeben, kann dem Begriff "Objekt" sowohl ein reales Objekt als auch dessen digitale Referenz bzw. dessen digitales Abbild oder digitales Referenzabbild verstanden werden.

Als nächstes erfolgt eine optische Erfassung eines ersten Bildausschnitts umfassend den ersten Abschnitt des Produktionsprozesses sowie eine Erstellung einer Bilddatensequenz aus Einzelbilddaten des ersten Bildausschnitts. Die Bilddatensequenz könnte man auch als "Live-Bild" bezeichnen und kann zum Beispiel als Livestream erzeugt werden. Die Erfassung des ersten Bildausschnitts erfolgt vorzugsweise mittels Kameratechnik, wobei vorzugsweise wenigstens eine staub- und/oder hitzegeschützte Kamera eingesetzt werden soll. Dabei kann es notwendig sein, jede Kamera virtuell zu kalibrieren. Dazu muss parametriert werden, an welchem Ort von Interesse in der Gesamtdimension des zu überwachenden Areals sich der Bildausschnitt befindet, der optisch erfasst werden soll. Ebenso müssen bei der Positionierung der Kameras Verzerrungen und Winkel zwischen dem Sichtbereich jeder Kamera und des Produktionsprozesses auf der einen Seite sowie zwischen den einzelnen Bereichen des Produktionsprozesses auf der anderen Seite berücksichtigt werden. Mit Hilfe der auf diese Weise erhaltenen Bilddatensequenzen kann mittels einer entsprechenden Software eine 3D-Matrix des zu überwachenden Abschnitts des Produktionsprozesses erstellt werden.

Als nächstes werden neu in den ersten Bildausschnitt eintretende Objekte durch digitale Auswertung der Einzelbilddaten der Bilddatensequenz identifiziert. Die Identifizierung von neu in den ersten Bildausschnitt eintretenden Objekten kann dabei durch eine entsprechende Software ausgeführt werden. Auf Grundlage der Identifizierung lassen sich die Objekte aus der Bilddatensequenz in einem nachfolgenden Schritt digital markieren.

Es folgt eine digitale Zuordnung eines digitalen Identifikators zu jedem identifizierten neu eingetretenen Objekt. Dabei wird jedem identifizierten und neu eintretenden Objekt vorzugsweise ein individueller digitaler Identifikator zugeordnet, sodass jeder digitale Identifikator mit genau einem Objekt korrespondiert. Diese Zuordnung kann auch als digitale Markierung des Objekts verstanden werden.

Anschließend werden Objekte, denen im Rahmen der digitalen Auswertung von älteren Einzelbilddaten der Bilddatensequenz bereits ein digitaler Identifikator zugeordnet wurde, durch digitale Auswertung von jüngeren Einzelbilddaten der Bilddatensequenz identifiziert. Vorzugsweise erfolgt die Identifizierung der Objekte, denen im Rahmen der digitalen Auswertung von älteren Einzelbilddaten der Bilddatensequenz bereits ein digitaler Identifikator zugeordnet wurde, durch einen Vergleich der jüngeren Einzelbilddaten mit älteren Einzelbilddaten. Durch diesen Schritt kann vermieden werden, dass bereits identifizierte und digital markierte Objekte erneut digital markiert werden bzw. dass ihnen ein zusätzlicher digitaler Identifikator zugeordnet wird.

Das erfindungsgemäße Verfahren ermöglicht somit die ortsunabhängige Erkennung und Verfolgung von Objekten, die sich in einem Herstellungsprozess befinden und die sich aus ökonomischen Gründen nicht durch konventionelle Techniken markieren oder verfolgen lassen.

Gemäß einer weiteren Ausführungsform kann zusätzlich vorgesehen sein, dass bei der Identifizierung von neu in den ersten Bildausschnitt eintretenden Objekten durch digitale Auswertung der Einzelbilddaten der Bilddatensequenz diesen identifizierten Objekten ein digitales Bildelement digital zugeordnet wird. Unter dem digitalen Bildelement ist dabei das virtuelle Abbild eines realen Objekts zu verstehen. Die Zuordnung der Bildelemente zu realen Objekten gewährleistet die Verfolgung der realen Objekte in der Bilddatensequenz. Außerdem kann hierdurch vermieden werden, dass bereits identifizierte Objekte erneut identifiziert werden.

Weiterhin kann bei dem Verfahren vorgesehen sein, dass bei der Identifizierung von Objekten, denen im Rahmen der digitalen Auswertung von älteren Einzelbilddaten der Bilddatensequenz bereits ein digitaler Identifikator zugeordnet wurde, durch digitale Auswertung von jüngeren Einzelbilddaten der Bilddatensequenz eine digitale Wiedererkennung des digitalen Bildelements durchgeführt wird. Dabei schlägt die Erfindung gemäß einer Ausführungsvariante vor, dass dem realen Objekt ein aktualisiertes Bildelement zugordnet wird. Die Auswertung der Einzelbilddaten der Bilddatensequenz erfolgt wenigstens mit 5 fps (*"frames per second",* dt. "Bildwechselfrequenz"), bevorzugt mit wenigstens 12 fps und besonders bevorzugt mit wenigstens 20 fps.

Nach einer Weiterentwicklung des Verfahrens können die Einzelbilddaten der Bilddatensequenz an eine programmierbare Vorrichtung, wie zum Beispiel einen oder mehrere Computer oder ein Rechensystem übertragen werden, wobei die Übertragung der Bilddatensequenz vorzugsweise in Echtzeit erfolgt. Darüber hinaus kann eine kabellose Übertragung vorgesehen sein. Dabei kann die programmierbare Vorrichtung vorteilhafterweise eine Grafikkarte mit wenigstens einer, vorzugsweise mit wenigstens zwei GPUs (grafische Verarbeitungseinheit oder "Graphics Processing Unit") aufweisen oder eine andere Beschleunigungstechnik für digitale Bildverarbeitung enthalten, wobei die GPUs oder die Rechenkerne der anderen Beschleunigungstechnik zur digitalen Auswertung der Einzelbilddaten der Bilddatensequenz eingesetzt werden. Sofern mehrere programmierbare Vorrichtungen oder Computer verwendet werden, können diese miteinander kommunizieren. Idealerweise sind die programmierbaren Vorrichtungen miteinander synchronisiert. Ein derartiger Verfahrensaufbau ermöglicht eine schnelle und einfache Objekterkennung.

Es kann ferner vorgesehen sein, dass das Identifizieren der Objekte mittels eines Computerimplementierten CV-Programms (CV = *Computer Vision*) erfolgt, das eine geeignete Objekterkennungstechnik aufweist. Gemäß einer vorteilhaften Ausgestaltung der Erfindung kann das Identifizieren der Objekte durch kontinuierliches und/oder sequentielles Auswerten der Einzelbilddaten durch die Objekterkennungstechnik erfolgt, wobei die Auswertung vorzugsweise in Echtzeit erfolgt. Die Verwendung eines CV-Programms ermöglicht auf einfache Art und Weise eine zuverlässige Objekterkennung und -verfolgung.

Nach einer Weiterbildung der Erfindung kann das Verfahren einen Schritt umfassen, wonach Parameter der identifizierten Objekte ermittelt werden, welche digital mit dem digitalen Identifikator des jeweiligen identifizierten Objekts verknüpft werden. Vorzugsweise erfolgt außerdem ein Eintragen der ermittelten Parameter in eine Identifikatordatenbank, wobei die Parameter kontinuierlich aktualisiert werden. Auf diese Weise können Daten, die mit einem Objekt oder mit einer Charge umfassend mehrere Objekte korrespondieren, an entsprechende Anlagen oder Systeme übergeben werden, an denen die Objekte zu Rückverfolgungszwecken mit einer physischen Kennzeichnung versehen werden, sobald dies möglich ist. Vorteilhafterweise können mithilfe der ermittelten und an Kennzeichnungssysteme übertragenen Parameter Teilbereiche der Produktionslinie bilanziert oder zu Qualitätssicherungszwecken ausgewertet werden. Denkbar ist aber jede Art der Verarbeitung der mit den digitalen Identifikatoren verknüpften Parameter nach beliebigen geschäfts- oder produktionsrelevanten Aspekten.

Vorteilhafterweise können die ermittelten Parameter wenigstens eine der folgenden Informationen umfassen: räumliche Position des identifizierten Objekts innerhalb des Produktionsprozesses; Position des identifizierten Objekts innerhalb einer Reihenfolge der identifizierten Objekte; Geometrische Abmessungen des identifizierten Objekts; Produktionszeitpunkt und/oder Produktionsdatum des identifizierten Objekts; Kennung des Produktionsprozesses; Prozessparameter des Produktionsprozesses, insbesondere im Zeitpunkt der Produktion des identifizierten Objekts; physikalische Eigenschaften des identifizierten Objekts. Von Vorteil ist dabei die Weiterentwicklung, nach der die räumliche Position des identifizierten Objekts insbesondere in Abhängigkeit von der Zeit bestimmt wird. Weitere Parameter können zum Beispiel Nennweite, Klasse oder Muffentyp usw. sein, insbesondere wenn das Objekt ein Rohr oder ein rohrartiges Werkstück ist.

Eine bedeutsame Weiterbildung sieht vor, dass das Verfahren außerdem die folgenden Schritte aufweist: Zuführen eines identifizierten Objekts zu einer Kennzeichnungsstation des Produktionsprozesses; Anbringen einer Kennung am zugeführten, identifizierten Objekt in der Kennzeichnungsstation; Erstellen einer digitalen Verknüpfung zwischen dem digitalen Identifikator des zugeführten, identifizierten Objekts und der angebrachten Kennung. Dabei ist vorzugsweise eine physische Kennung vorgesehen, etwa das Aufdrucken eines Labels, eines Barcodes oder eines QR-Codes (*"Quick Response",* dt. "schnelle Antwort") oder vergleichbarer Codes. Auch ein Auf- oder Eindrucken oder ein Einprägen in eine Oberfläche des Objekts ist denkbar. Vorzugsweise, jedoch nicht notwendigerweise, handelt es sich um eine individuelle Kennung. Dabei kann auch vorgesehen sein, dass die identifizierten Objekte bis zum Anbringen einer vorzugsweise individuellen und beispielsweise physischen Kennung keine anderweitige Kennung als den digitalen Identifikator aufweisen, insbesondere keine physische Kennung. Durch die digitale Verknüpfung zwischen dem digitalen Identifikator des zugeführten, identifizierten Objekts und der angebrachten Kennung wird gewährleistet, dass die physische Kennung einen Rückschluss auf die Paramater ermöglicht, die mit dem verknüpften digitalen Identifikator korrespondieren.

Gemäß einer vorteilhaften Ausgestaltung der Erfindung bringt die die Kennzeichnungsstation die Kennung basierend auf dem digitalen Identifikator an dem identifizierten Objekt an. Dieser Schritt ermöglicht unter anderem eine Rückverfolgbarkeit der Objekte hinsichtlich ihres Produktionsweges.

Nach einer bevorzugten Ausführungsform schlägt die Erfindung außerdem vor, dass die Objekte Rohre, Rohrbauteile oder Rohteile hierfür sind. Dabei kann insbesondere vorgesehen sein, dass die Rohre, Rohrbauteile oder Rohteile Gießteile sind, die vorzugsweise aus Metall oder Gusseisen hergestellt sind. Ferner können die Objekte im ersten Abschnitt eine Temperatur von mindestens 200 °C aufweisen. Objekte, bei denen diese beiden Faktoren zum Tragen kommen, sind zum Beispiel gusseiserne Rohre, wie sie etwa zum Führen von Abwasser zum Einsatz kommen. Zum einen wird bei einer Vielzahl der zur Herstellung solcher Rohre nötigen Schritte mit hohen Temperaturen gearbeitet; zum anderen werden derartige Rohre sehr häufig mit verschiedenen korrosionshemmenden Materialien beschichtet. Durch das erfindungsgemäße Verfahren lassen sich statistische Zusammenhänge zwischen Parametern, die einem Identifikator zugeordnet sind, und Qualitätsmängeln, wie etwa die Ovalität oder die sonstige Beschaffenheit von Rohren, ausgewertet werden. Gerade bei derartigen Produkten ist das vorliegende Verfahren vorteilhaft. Schließlich stehen die hohen Temperaturen, welche die Objekte bei ihrer Herstellung aufweisen, einer frühzeitigen Kennzeichnung im Wege.

Es ist außerdem von Vorteil, wenn vor dem ersten Abschnitt des Produktionsprozesses eine Maschine, insbesondere eine Gießmaschine, angeordnet ist, mit der die Objekte gegossen werden, wobei den digitalen Identifikatoren Herstelldaten aus der Steuerung der Gießmaschine zugeordnet werden.

Ferner kann der erste Bildausschnitt ein einzelnes Kamerabild sein oder durch digitales Zusammenführen mehrerer Kamerabilder beziehungsweise durch digitales Zusammenführen der ausgewerteten Objekt-/ldentifikatorendaten generiert werden. Das Zusammenführen mehrerer Kamerabilder erhöht die Genauigkeit der optischen Erfassung des Bildausschnitts und erleichtert außerdem die Erstellung einer 3D-Matrix des zu überwachenden Abschnitts des Produktionsprozesses. Es ist möglich, dass der Zusammenschluss mehrerer Kameras nicht durch ein "Zusammenschneiden" der Kamerabilder zu einem großen Bild erreicht wird, sondern dass alle Kameras in eigenen Recheninstanzen ausgewertet werden, sodass die so erhaltenen Daten von einer weiteren, übergeordneten Recheninstanz validiert und zusammengeführt werden.

Es kann darüber hinaus von Vorteil sein, dass sich an den ersten Abschnitt des Produktionsprozesses ein zweiter Abschnitt des Produktionsprozesses anschließt, in den sich die identifizierten Objekte nach Verlassen des ersten Abschnitts hineinbewegen, wobei folgende Schritte durchgeführt werden: optische Erfassung eines zweiten Bildausschnitts umfassend den zweiten Abschnitt des Produktionsprozesses und Erstellung einer Bilddatensequenz aus Einzelbilddaten des zweiten Bildausschnitts; Identifizierung von neu in den zweiten Bildausschnitt eintretenden Objekten, denen im Rahmen der digitalen Auswertung von älteren Einzelbilddaten der Bilddatensequenz des ersten Bildausschnitts bereits ein digitaler Identifikator zugeordnet wurde, durch digitale Auswertung von jüngeren Einzelbilddaten der Bilddatensequenz des zweiten Bildausschnitts; digitale Zuordnung eines digitalen Identifikators zu jedem identifizierten neu in den zweiten Bildausschnitt eingetretenen Objekts; Identifizierung von Objekten, denen im Rahmen der digitalen Auswertung von älteren Einzelbilddaten der Bilddatensequenz des zweiten Bildausschnitts bereits ein digitaler Identifikator zugeordnet wurde, durch digitale Auswertung von jüngeren Einzelbilddaten der Bilddatensequenz des zweiten Bildausschnitts. Dabei können die zur optischen Erfassung eingesetzten Kameras derart kalibriert bzw. deren Sichtbereiche überlappt werden, dass der Ausgang des ersten Bildausschnitts als der Eingang des zweiten Bildausschnitts erkannt wird. Neben dem zweiten Bildausschnitt können beliebig viele weitere Bildausschnitte hinzukommen. Die Auswertung der Bilddatensequenzen der weiteren Bildausschnitte erfolgt dabei analog zu den Schritten betreffend den ersten Bildausschnitt und den zweiten Bildausschnitt.

Dabei kann vorgesehen sein, dass die optische Erfassung des zweiten Bildausschnitts mittels Kameratechnik erfolgt. Ferner schlägt die Erfindung gemäß dieser Ausführungsform vor, dass die Identifizierung von neu in den zweiten Bildausschnitt eintretenden Objekten, denen im Rahmen der digitalen Auswertung von älteren Einzelbilddaten der Bilddatensequenz des ersten Bildausschnitts bereits ein digitaler Identifikator zugeordnet wurde, durch einen Vergleich der jüngeren Einzelbilddaten, insbesondere des zweiten Bildausschnitts, mit älteren Einzelbilddaten des ersten Bildausschnitts erfolgt.

Gemäß einer vorteilhaften Weiterentwicklung kann außerdem vorgesehen sein, dass der digitale Identifikator, der jedem identifizierten, neu in den zweiten Bildausschnitt eingetretenen Objekt zugeordnet wird, ein individueller Identifikator ist. Es ist ferner möglich, dass die Identifizierung von Objekten, denen im Rahmen der digitalen Auswertung von älteren Einzelbilddaten der Bilddatensequenz des zweiten Bildausschnitts bereits ein digitaler Identifikator zugeordnet wurde, vorzugsweise durch einen Vergleich der jüngeren Einzelbilddaten mit älteren Einzelbilddaten erfolgt. Dabei ist üblicherweise vorgesehen, dass der zugeordnete digitale Identifikator im zweiten Abschnitt dem zugeordneten digitalen Identifikator im ersten Abschnitt entspricht.

Neben dem zweiten Bildausschnitt können beliebig viele weitere Bildausschnitte hinzukommen. Die Auswertung der Bilddatensequenzen der weiteren Bildabschnitte erfolgt dabei analog zu den Schritten betreffend den ersten Bildausschnitt und den zweiten Bildausschnitt. Das hat zum Vorteil, dass ein Produktionsprozess beliebiger Länge überwacht werden kann. Ein weiterer Vorteil, der sich hieraus ergibt, besteht darin, dass Objekte in unterschiedliche Abschnitte des Produktionsprozesses ausgeschleust und zu einem späteren Zeitpunkt aus diesen wieder eingeschleust werden können.

Gemäß einer bevorzugten Ausführungsform kann das Verfahren dadurch gekennzeichnet sein, dass einer sich an den ersten und/oder zweiten Abschnitt anschließenden Station des Produktionsprozesses eine serielle Liste der Identifikatoren der übergebenen Objekte übermittelt wird, wobei die übergebenen Objekte von der Station anhand der seriellen Liste der Identifikatoren identifiziert werden. Die anschließende Station kann beispielsweise ein Pufferspeicher sein. In einem solchen Pufferspeicher können Objekte, denen ein digitaler Identifikator zugeordnet ist, beispielsweise nach dem FIFO-Prinzip (First In - First Out) oder LIFO- Prinzip (Last In - First Out) gespeichert werden. Nach dem gleichen Prinzip können Stationen des Produktionsprozesses funktionieren, in denen zur Bearbeitung ein einziges Objekt mit zugeordnetem digitalen Identifikator aufgenommen wird. Kommt ein solches Objekt mit zugeordnetem digitalen Identifikator wieder aus dem Pufferspeicher oder der Station heraus, wird der Identifikator an die Folgestation übergeben, um die Identifizierung fortzuschreiben.

Das Verfahren kann außerdem dadurch gekennzeichnet sein, dass aus dem ersten Abschnitt ein bereits identifiziertes Objekt ausgeschleust wird, wobei dem digitalen Identifikator eine Ausschleusungskennung zugefügt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung eines Abschnitts eines Produktionsprozesses in Aufsicht;
- Fig. 2: eine schematische Darstellung eines Abschnitts eines Produktionsprozesses in perspektivischer Ansicht;
- Fig. 3: eine schematische Darstellung eines Identifizierungsschritts zur Identifizierung von Objekten durch digitale Auswertung von Einzelbilddaten einer Bilddatensequenz.

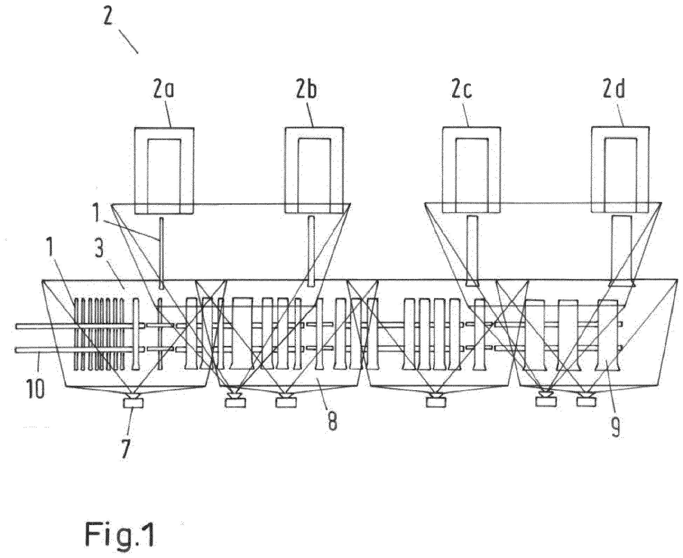

Fig. 1 zeigt eine schematische Darstellung eines Abschnitts 2 eines Produktionsprozesses zur Herstellung von Objekten 1 in Aufsicht. Der gezeigte Abschnitt 2 weist vier Maschinen 2a, 2b, 2c, 2d auf. In dem Ausführungsbeispiel stellt der Abschnitt 2 eine Gießhalle dar. Die Maschinen 2a, 2b, 2c, 2d sind Gießmaschinen. Die in Fig. 1 abgebildeten Objekte 1 sind Rohre 9 verschiedener Größen. Die Rohre 9 werden seriell durch ein Förderband 10 bewegt, wobei neu gegossene Rohre 9 von den Gießmaschinen in die Serie übergeben werden. Gemäß der in Fig. 1 gezeigten Ausführung sind mehrere Kameras 7 derart ausgerichtet, dass sie einen gewünschten Teil des Transportweges der Objekte 1 optisch erfassen bzw. den Bildausschnitt an das auswertende System "streamen" oder übertragen können, wobei sich der gewünschte Teil sich in dem zu überwachenden Abschnitt des Produktionsprozesses 2 befindet. Mit Hilfe der auf diese Weise erhaltenen Einzelbilddaten 5a, 5b kann mittels einer entsprechenden Software eine 3D-Matrix erstellt werden. Der von den Kameras 7 erfasste Bereich wird erfindungsgemäß als Bildausschnitt 3, 8 bezeichnet. Ein speziell ausgestattetes Rechensystem bzw. ein Computer (in Fig. 1 nicht gezeigt) erhält nun von den Kameras 7 Bilddatensequenzen 4 aus Einzelbilddaten 5a, 5b. Die Bilddatensequenzen 4 sind bevorzugterweise Liveaufnahmen bzw. "Streams" und werden gemäß der in Fig. 1 dargestellten Variante kabellos an den Computer übertragen.

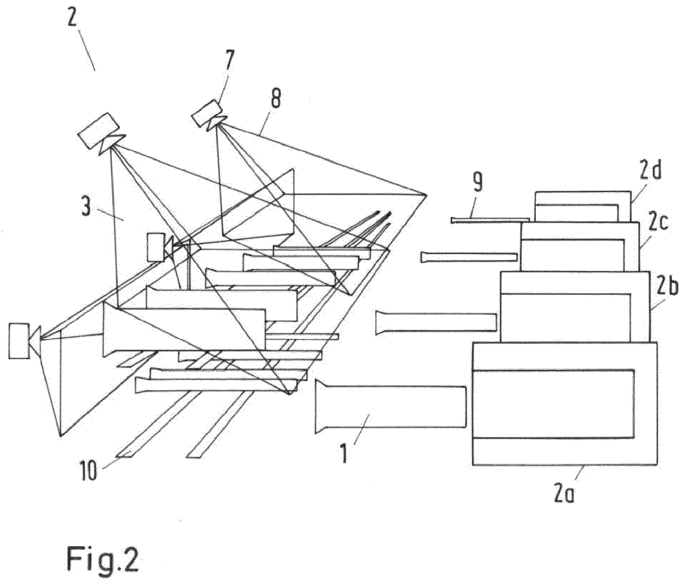

Fig. 2 zeigt eine schematische Darstellung eines Abschnitts eines mit dem in Fig. 1 gezeigten Produktionsprozess vergleichbaren Prozesses in perspektivischer Ansicht. Bei dem in Fig. 2 gezeigten Beispiel befinden sich die Objekte 1, welche ebenfalls Rohre 9 sind, in zwei verschiedenen Ebenen. Somit kommt zu den beiden Dimensionen aus dem in Fig. 1 gezeigten Produktionsprozess eine dritte Dimension hinzu. Gemäß der Ausführungsform in Fig. 2 sind dabei verschiedene Kameras 7 in unterschiedlichen Winkeln und auf unterschiedliche Bildebenen ausgerichtet. Mit Hilfe der auf diese Weise erhaltenen Einzelbilddaten 5a, 5b kann mittels einer entsprechenden Software eine 3D-Matrix des zu überwachenden Abschnitts 2 des Produktionsprozesses erstellt werden. Das erfindungsgemäße Verfahren zur Verfolgung der Objekte 1 in einem Produktionsprozess gemäß Fig. 2 entspricht dem Verfahren, das im Zusammenhang mit Fig. 1 beschriebenen wird.

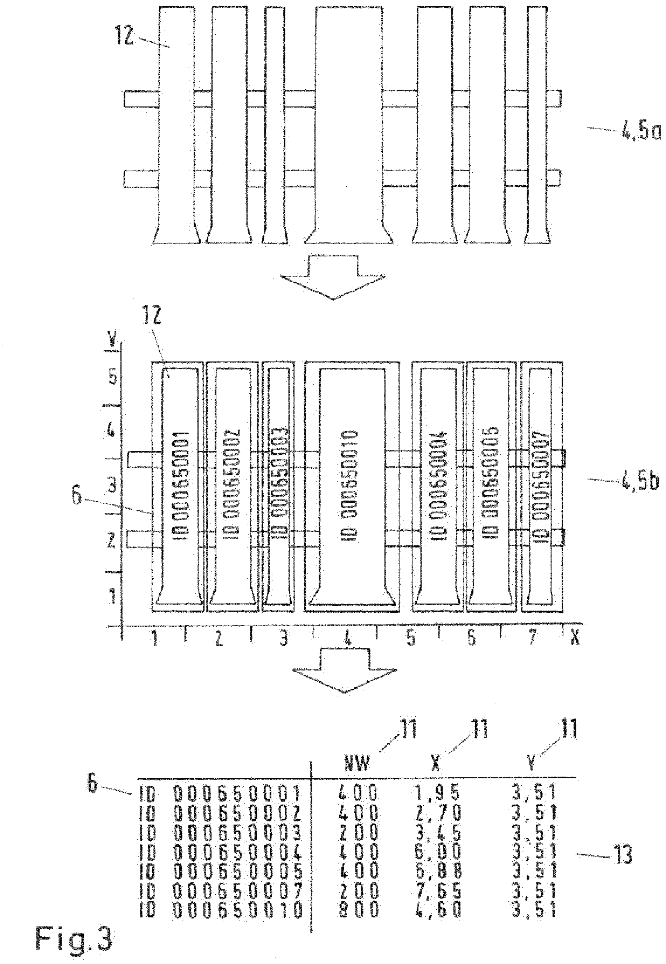

Fig. 3 zeigt eine schematische Darstellung eines Identifizierungsschritts zur Identifizierung von Objekten 1 durch digitale Auswertung von Einzelbilddaten 5a, 5b einer Bilddatensequenz 4. Die Bilddatensequenz 4 kann zum Beispiel gemäß einer der Ausführungsformen aus Fig.1 oder Fig. 2 erstellt worden sein. Bei dem in Fig. 3 gezeigten Ausführungsbeispiel erhält ein Computer, etwa über eine Netzwerkverbindung, die Bilddatensequenz 4 als "Stream". Der Computer wertet nun nacheinander jede Einzelbilddatei 5a der Bilddatensequenz 4 aus ("Bild-für-Bild"). Dabei identifiziert ein spezielles Programm Objekte 1, die neu in den mit der Einzelbilddatei 5a korrespondierenden Bildausschnitt eintreten, wobei das Programm vorzugsweise eine CV-Software ist, das digitale Bildelemente 12 erkennt, die mit realen Objekten 1 korrespondieren. In Fig. 3 sind die in der Einzelbilddatei 5a gezeigten Bildelemente 12 aus Gründen der Übersicht allesamt nicht identifiziert. Die auf diese Wiese identifizierten Objekte 1 werden mit je einem digitalen Identifikator 6 markiert. Eine Zuordnung der Identifikatoren 6 zu den Bildelementen 12 der Objekte 1 ist beispielhaft in der in Fig. 3 gezeigten Einzelbilddatei 5b dargestellt. Gemäß der hier vorliegenden Ausführungsform handelt es sich um individuelle Identifikatoren 6. Somit korrespondiert jeder digitale Identifikator 6 mit genau einem digitalen Bildelement 12 und demnach mit genau einem realen Objekt 1. Die Software aktualisiert die Identifikatoren 6 nach jedem Identifizierungsschritt für jedes digitale Bildelement 12 und "verfolgt" somit jedes einzelne Objekt 1 in der Bilddatensequenz 4. Dazu schlägt das Verfahren insbesondere vor, dass in jeder jüngeren Einzelbilddatei 5b stets die Objekte 1 identifiziert werden, denen im Rahmen der digitalen Auswertung von älteren Einzelbilddaten 5a, 5b der Bilddatensequenz 4 bereits ein digitaler Identifikator 6 zugeordnet wurde. Dieser Schritt erfolgt durch digitale Auswertung von jüngeren Einzelbilddaten 5a,5b der Bilddatensequenz 4, wobei ein Vergleich der jüngeren Einzelbilddaten 5a, 5b mit älteren Einzelbilddaten 5a, 5b des ersten Bildausschnitts stattfindet.

Mit den digitalen Identifikatoren 6 aus Fig. 3 werden Parameter 11 verknüpft. Diese Parameter können Daten wie etwa die räumliche Position des identifizierten Objekts 1 innerhalb des Produktionsprozesses, insbesondere in Abhängigkeit von der Zeit; die Position des identifizierten Objekts 1 innerhalb einer Reihenfolge der Objekte 1; geometrische Abmessungen des Objekts 1; Produktionszeitpunkt und/oder Produktionsdatum des identifizierten Objekts 1; Kennung des Produktionsprozesses; Prozessparameter des Produktionsprozesses, insbesondere im Zeitpunkt der Produktion des identifizierten Objekts 1; physikalische Eigenschaften des identifizierten Objekts 1. Die Parameter können dabei kontinuierlich aktualisiert werden. Gemäß der in Fig. 3 gezeigten Ausführungsvariante sind die Parameter 11 in einer Identifikatordatenbank 13 gespeichert und geben einen Nennweite der Rohre (NW, z.B. 600 für 600 mm) an sowie eine räumliche Position des jeweiligen Rohrs 9 innerhalb einer zweidimensionalen Matrix (X- und Y-Werte) an.

Verlässt ein Rohr einen ersten Bildausschnitt 3 und tritt in einen zweiten Bildausschnitt 8 ein, wertet das Programm die Bilddatensequenz 4 der Einzelbilddateien analog zu den eben beschriebenen Verfahrensschritten aus. Auf diese Weise wird ein "Übertreten" der Objekte 1 von einem Bildausschnitt 3, 8 in einen benachbarten Bildausschnitt 3, 8 gewährleistet.

Am Ende oder zu einem anderen festgelegten Zeitpunkt innerhalb des Produktionsprozesses werden die identifizierten Objekte 1 zu einer Kennzeichnungsstation zugeführt (nicht gezeigt). In der Kennzeichnungsstation kann eine Kennung an dem zugeführten identifizierten Objekt 1 angebracht werden. Dabei wird eine digitale Verknüpfung zwischen dem digitalen Identifikator 6 des zugeführten, identifizierten Objekts 1 und der angebrachten Kennung erstellt. Vorzugsweise ist eine physische Kennung vorgesehen, etwa das Aufdrucken eines Labels, eines Barcodes oder eines QR Codes oder vergleichbarer Codes. Auch ein Auf- oder Eindrucken oder ein Einprägen in eine Oberfläche des Objekts 1 ist denkbar. Durch die Verknüpfung der Kennung mit dem digitalen Identifikator 6 können zu jedem Objekt 1 zu jederzeit die zugehörigen Parameter abgerufen werden.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Objekt
- 2: Abschnitt eines Produktionsprozesses
- 2a-2d: Maschine
- 3: erster Bildausschnitt
- 4: Bilddatensequenz
- 5a,5b: Einzelbilddaten
- 6: digitaler Identifikator
- 7: Kamera
- 8: zweiter Bildausschnitt
- 9: Rohr
- 10: Förderband
- 11: Parameter
- 12: Bildelement
- 13: Liste der Identifikatoren

## Patentansprüche

1. Verfahren zur Verfolgung von Objekten (1) in einem Produktionsprozess, umfassend die folgenden Schritte:
a) Bewegen von Objekten (1) entlang eines ersten Abschnitts eines Produktionsprozesses (2);
b) optische Erfassung eines ersten Bildausschnitts (3) umfassend den ersten Abschnitt des Produktionsprozesses (2) und Erstellung einer Bilddatensequenz (4) aus Einzelbilddaten (5a,5b) des ersten Bildausschnitts (3);
c) Identifizierung von neu in den ersten Bildausschnitt (3) eintretenden Objekten (1) durch digitale Auswertung der Einzelbilddaten (5a,5b) der Bilddatensequenz (4);
d) digitale Zuordnung eines digitalen Identifikators (6) zu jedem identifizierten neu eingetretenen Objekt (1);
e) Identifizierung von Objekten (1), denen im Rahmen der digitalen Auswertung von älteren Einzelbilddaten (5a,5b) der Bilddatensequenz (4) bereits ein digitaler Identifikator (6) zugeordnet wurde, durch digitale Auswertung von jüngeren Einzelbilddaten (5a,5b) der Bilddatensequenz (4).

2. Verfahren gemäß Anspruch 1, **dadurch gekennzeichnet, dass** bei der Identifizierung von neu in den ersten Bildausschnitt (3) eintretenden Objekten (1) durch digitale Auswertung der Einzelbilddaten (5a,5b) der Bilddatensequenz (4) diesen identifizierten Objekten (1) ein digitales Bildelement (12) digital zugeordnet wird.

3. Verfahren gemäß Anspruch 2, **dadurch gekennzeichnet, dass** bei der Identifizierung von Objekten (1), denen im Rahmen der digitalen Auswertung von älteren Einzelbilddaten (5a,5b) der Bilddatensequenz (4) bereits ein digitaler Identifikator (6) zugeordnet wurde, durch digitale Auswertung von jüngeren Einzelbilddaten (5a,5b) der Bilddatensequenz (4) eine digitale Wiedererkennung des digitalen Bildelements (12) durchgeführt wird.

4. Verfahren nach einem der vorhergehenden Ansprüche, **gekennzeichnet durch** folgende Schritte:
- Ermitteln von Parametern (11) der identifizierten Objekte (1) und digitale Verknüpfen der ermittelten Parameter (11) mit dem digitalen Identifikator (6) des jeweiligen identifizierten Objekts (1).

5. Verfahren gemäß Anspruch 4, **dadurch gekennzeichnet, dass** die ermittelten Parameter (11) wenigstens einen der folgenden Informationen umfassen:
- räumliche Position des identifizierten Objekts (1) innerhalb des Produktionsprozesses, insbesondere in Abhängigkeit von der Zeit;
- Position des identifizierten Objekts (1) innerhalb einer Reihenfolge der identifizierten Objekte;
- Geometrische Abmessungen des identifizierten Objekts (1);
- Produktionszeitpunkt und/oder Produktionsdatum des identifizierten Objekts (1);
- Kennung des Produktionsprozesses;
- Prozessparameter des Produktionsprozesses, insbesondere im Zeitpunkt der Produktion des identifizierten Objekts (1);
- physikalische Eigenschaften des identifizierten Objekts (1).

6. Verfahren gemäß einem der vorhergehenden Ansprüche, **gekennzeichnet durch** folgende Schritte:
- Zuführen eines identifizierten Objekts (1) zu einer Kennzeichnungsstation des Produktionsprozesses;
- Anbringen einer Kennung am zugeführten, identifizierten Objekt (1) in der Kennzeichnungsstation;
- Erstellen einer digitalen Verknüpfung zwischen dem digitalen Identifikator (6) des zugeführten, identifizierten Objekts (1) und der angebrachten Kennung.

7. Verfahren nach einem der vorhergehenden Ansprüche, **dadurch gekennzeichnet, dass** die Objekte (1) Rohre (9), Rohrbauteile oder Rohteile hierfür sind.

8. Verfahren nach einem der vorhergehenden Ansprüche, **dadurch gekennzeichnet, dass** vor dem ersten Abschnitt des Produktionsprozesses (2) eine Maschine (2a-2d) angeordnet ist, mit der die Objekte (1) gegossen werden, wobei den digitalen Identifikatoren (6) Herstelldaten aus der Steuerung der Maschine (2a-2d) zugeordnet werden.

9. Verfahren nach einem der vorhergehenden Ansprüche, **dadurch gekennzeichnet, dass** der erste Bildausschnitt (3) ein einzelnes Kamerabild ist oder durch digitales Zusammenführen mehrere Kamerabilder generiert wird.

10. Verfahren nach einem der vorhergehenden Ansprüche, **dadurch gekennzeichnet, dass** sich an den ersten Abschnitt des Produktionsprozesses (2) ein zweiter Abschnitt des Produktionsprozesses (2) anschließt, in den sich die identifizierten Objekte (1) nach Verlassen des ersten Abschnitts (2) hineinbewegen, wobei folgende Schritte durchgeführt werden:
a) optische Erfassung eines zweiten Bildausschnitts (8) umfassend den zweiten Abschnitt des Produktionsprozesses (2) und Erstellung einer Bilddatensequenz (4) aus Einzelbilddaten (5a,5b) des zweiten Bildausschnitts (8);
b) Identifizierung von neu in den zweiten Bildausschnitt (8) eintretenden Objekten (1), denen im Rahmen der digitalen Auswertung von älteren Einzelbilddaten (5a,5b) der Bilddatensequenz (4) des ersten Bildausschnitts (3) bereits ein digitaler Identifikator (6) zugeordnet wurde, durch digitale Auswertung von jüngeren Einzelbilddaten (5a,5b) der Bilddatensequenz (4) des zweiten Bildausschnitts (8);
c) digitale Zuordnung eines digitalen Identifikators (6) zu jedem identifizierten neu in den zweiten Bildausschnitt (8) eingetretenen Objekts (1);
d) Identifizierung von Objekten (1), denen im Rahmen der digitalen Auswertung von älteren Einzelbilddaten (5a,5b) der Bilddatensequenz (4) des zweiten Bildausschnitts (8) bereits ein digitaler Identifikator (6) zugeordnet wurde, durch digitale Auswertung von jüngeren Einzelbilddaten (5a,5b) der Bilddatensequenz (4) des zweiten Bildausschnitts (8).

11. Verfahren nach einem der vorhergehenden Ansprüche, **dadurch gekennzeichnet, dass** einer sich an den ersten und/oder zweiten Abschnitt (2) anschließenden Station des Produktionsprozesses eine serielle Liste der Identifikatoren (13) der übergebenen Objekte (1) übermittelt wird, wobei die übergebenen Objekte (1) von der Station anhand der seriellen Liste der Identifikatoren (13) identifiziert werden.

12. Verfahren nach einem der vorhergehenden Ansprüche, **dadurch gekennzeichnet, dass** aus dem ersten Abschnitt (2) ein bereits identifiziertes Objekt (1) ausgeschleust wird, wobei dem digitalen Identifikator (6) eine Ausschleusungskennung zugefügt wird.
